# EUROPEAN PATENT SPECIFICATION

(11) **EP 0 429 781 B1**
(45) Date of publication and mention of the grant of the patent: **10.07.1996**
(21) Application number: 90117216.3
(22) Date of filing: 06.09.1990
(51) Int. Cl.: G06F 1/30, G06F 11/14, G06F 9/44, G06F 9/46

(54) **Resume control system and method for executing resume processing while checking operation mode of CPU**
System und Verfahren zur Wiederaufnahme mit Überprüfung des Operationsmodus der Zentraleinheit
Système et procédé de reprise pour reprendre l'exécution avec contrôle du mode d'opération de l'unité centrale

(30) Priority: 30.11.1989 JP 309124/89
(43) Date of publication of application: 05.06.1991
(73) Proprietor: KABUSHIKI KAISHA TOSHIBA, Kawasaki-shi, Kanagawa-ken 210 (JP)
(72) Inventor: Arai, Makoto, c/o Intellectual Property Division, Minato-ku, Tokyo 105 (JP)
(74) Representative: Henkel, Feiler, Hänzel & Partner

(56) References cited:
- EP-A- 0 197 552
- EP-A- 0 230 351
- EP-A- 0 256 815

## Description

This invention relates to a resume control system suitable for a personal computer having a resume function and also to a method used in the system.

The development of semiconductor technology has enabled microprocessors and memory LSIs of high performance to be manufactured at very low cost. In particular, some of these microprocessors can simultaneously perform 8-bit processing, 16-bit processing, and 32-bit processing, and hence can process data at high speed. The following products, made by Intel Co., Ltd in the U.S.A., and generally used in personal computers, are listed as such microprocessors: iAPX86 (8086), iAPX88 (8088), iAPX186 (80186), iAPX286 (80286), and iAPX386 (80386).

The iAPX286, for example, can operate in two modes, i.e., real address mode and protective virtual address mode. In the real address mode, a memory having a capacity of less than 1MB can be accessed, and the programs made for iAPX86 or iAPX186 also can be executed without being modified. In the protective virtual mode, a memory having a capacity of 1MB or more can be accessed, and all functions of the iAPX286 are enabled, which include data protection, system integration, simultaneous processing of tasks, and management of memories such as a virtual memory. The protective virtual mode and real address mode are determined by setting and resetting a protection enabling bit provided in the iAPX286, respectively.

The memories are addressed by the use of segment registers and offset registers in the real address mode, and addressed by the use of global descriptor tables (GDT), segment selectors, and offset registers, in the protective virtual address mode.

A personal computer, using the iAPX286 and having resume function, has been developed in recent years.

Further, various application softwares, to be executed in the protective virtual mode, have been developed, though application softwares, made by microprocessors prior to the iAPX286, were prevailing before. This requires resume processing to be carried out in the protective virtual address mode.

However, the conventional resume processing programs can be executed in the real address mode only. As is described above, the memories are addressed in different ways between the real address mode and protective virtual address mode. Accordingly, these conventional programs cannot be executed in the protective virtual address mode, unless they are modified.

It makes the control complex to execute the programs for the real address mode in the protective virtual address mode. Alternatively, it costs a lot to prepare respective resume processing programs for the real address mode and protective virtual address mode.

Document JP-A-1279312 published on 09/11/89 which corresponds to US-A-5435005 published on 18/07/95 discloses a method and a system for resuming data processing. In this method, the resuming mode is set after the computer system is bootloaded. When the power switch is turned off, the power source generates a power switch-off signal. In the resume mode, the system data is stored in a file upon detection of the power switch-off signal. After a predetermined period of time has elapsed from the switch-off, or if a signal is generated for indicating that the storage of the system data has been completed, the power is cut off. When the power switch is turned on again, the initialization of memories and the like, and the system data stored in the file are read out of it, and then restored in the memories. Thus, the data processing can be resumed in the state of the system having been assumed immediately before the power switch was turned off.

An object of the present invention is to provide a resume control method and a system which can be operated with a simple control both in real address mode and in protective virtual address mode, by using a single resume processing program.

According to a first aspect of the invention, a resume control method for a personal computer provided with a central processing unit (CPU) operable in first and second modes, and capable of executing a resume processing program set to be executed in one of the first and second modes comprises the steps of: a) determining and saving the mode in which the CPU is operating, in response to an abnormality of the power source; b) setting said CPU to operate in the one of the first and second modes in which the resume processing program can be executed; c) saving system data indicative of conditions in which the CPU has been operated upon the abnormality of the power source; d) restoring the system data saved in the step c), in response to a supplement of the power source; e) setting the CPU operation mode to the mode in which said CPU has been operated upon occurrence of the abnormality; and f) resuming the processing interrupted upon the occurrence of the abnormality of the power source.

According to a second aspect of the invention, a computer apparatus comprises a central processing unit (CPU) operable in first and second modes, and capable of executing a resume processing program set to be executed in one of the first and second modes; power source means for supplying power to said CPU; detecting means for detecting an abnormality in the power source means; storing means for storing the mode in which the CPU is operating, upon detection of the abnormality; setting means for setting said CPU to operate in one of the first and second modes in which the resume processing program can be executed; saving means for saving system data indicative of conditions of a program executed by said CPU when the abnormality of said power source means is detected; restoring means for restoring the saved system data, in response to a supplement of power from said power source means; and means for resuming the processing which has been executed by said CPU from the conditions when the system data was saved, based on the restored system data.

This invention can be more fully understood from the following detailed description when taken in conjunction with the accompanying drawings, in which:
Fig. 1 is a system block diagram of a personal computer to which resume control system and method according to the present invention are applied;
Fig. 2 is a conceptual view showing an outline of a resume processing according to the resume control system and method of the present invention;
Fig. 3 is a flowchart of NMI processing executed in the resume-control system and method of the present invention;
Fig. 4 is a flowchart of power-on processing executed in the resume control system and method of the present invention; and
Fig. 5 is a flowchart of resume mode-setting processing executed in the resume-control system and method of the invention.

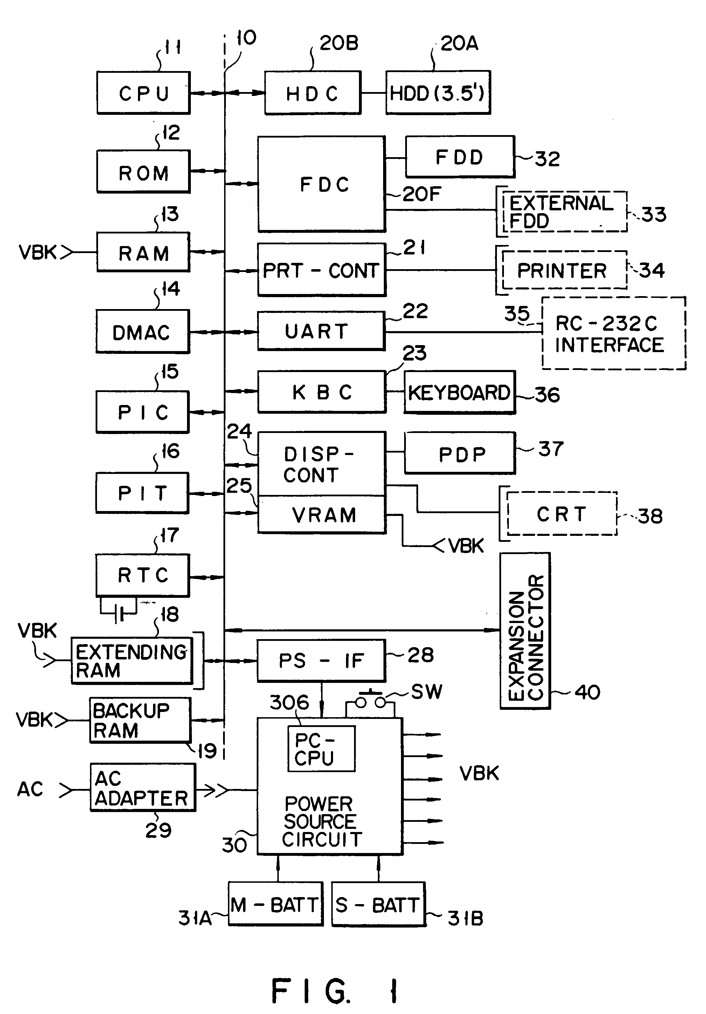

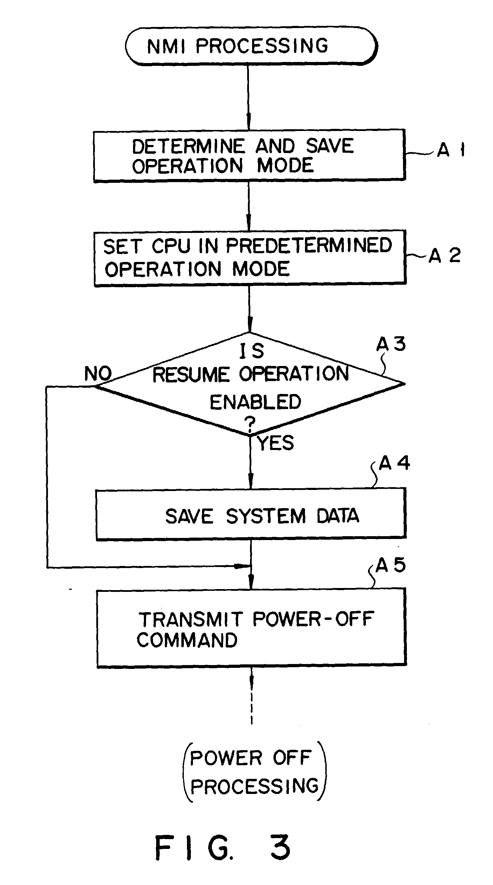

Fig. 1 is a system block diagram of a personal computer system to which a resume control system and a method of the present invention are applied. As shown in Fig. 1, a system bus 10 is connected to components 11 to 25. A CPU 11 controls the entire system. In this embodiment, the CPU 11 has functions as shown in the flowcharts of Figs. 3 to 5, and serves as a host CPU viewed from a power control CPU 306 in a power source circuit 30 to be described later.

A ROM 12 stores fixed programs, data and the like. A RAM 13 stores programs and data, to be processed, and also stores a resume mode flag, to be described later, and the like. A DMA controller 14 controls a direct memory access.

A PIC (Programmable Interrupt Controller) 15 can be set by a program, and outputs an interrupt signal. A PIT (Programmable Interval Timer) 16 can be set by a program, and downcounts a set time period. A RTC (Real Time Clock) 17 has a dedicated power battery (not shown), and measurs the current time. An extension RAM 18, having a relatively large memory capacity, is removably inserted in a dedicated card slot of a main body, and is supplied with a backup power (VBK). A backup RAM 19 stores data for realizing a resume function, system data and a system data flag, to be described later. The RAM 19 is supplied with a backup power (VBK).

A hard disk pack 20 is removably inserted in a dedicated housing section of a main body, and comprises a hard disk drive (HDD) 20A of, for example, 3.5 inches, and a hard disk controller (HDC) 20B for controlling the accessing by the drive 20A. Reference 20F designates a floppy disk controller (FDC); 21, a printer controller (PRT-CNT); 22, an input/output interface (UART; Universal Asynchronous Receiver); 23, a keyboard controller (KBC); and 24, a display controller (DISP-CONT). A video RAM (VRAM) 25 is supplied with a backup power (VBK), and stores display image data.

A power source control interface (PS-IF) 28 connects the power source circuit 30 to the CPU 11 through the system bus 10. Upon receiving, from the power control CPU 306 in the power source circuit 30, power source abnormality data such as the cutoff of the power, and a low battery, the PS-IF 28 outputs an NMI (Non-Maskable Interrupt) signal, corresponding to the contents of the abnormality information, to the host CPU 11.

A power source adapter (AC adapter) 29 rectifies and smoothes commercially available alternating current (AC) to obtain direct current power of a predetermined potential.

The AC adapter 29 is plugged in the personal computer main body. The power source circuit 30 supplies power to the respective components of the computer apparatus.

A battery 31A serves to operate as a main battery (M-BATT), comprises a rechargeable battery, and is removably connected to the power source circuit 30. A battery 31B serves, to operate as a sub-battery, comprises a rechargeable battery, and is incorporated in the main body. A floppy disk drive (FDD) 32 is connected to the floppy disk controller 20F. An external floppy disk drive 33 is connected to the external floppy disk drive 33 as the necessity requires. A printer 34 is connected to the printer controller 21 as the necessity requires. An interface unit 35 is connected to the input/output interface 22 as the necessity requires, and comprises an RS-232C interface unit, etc. A keyboard 36 is connected to the keyboard controller 23. A PDP 37 is connected to the display controller 24. A CRT 38 is connected to the display controller 24 as the necessity requires. An extension unit is connected to an extension connector 40 as the necessity requires.

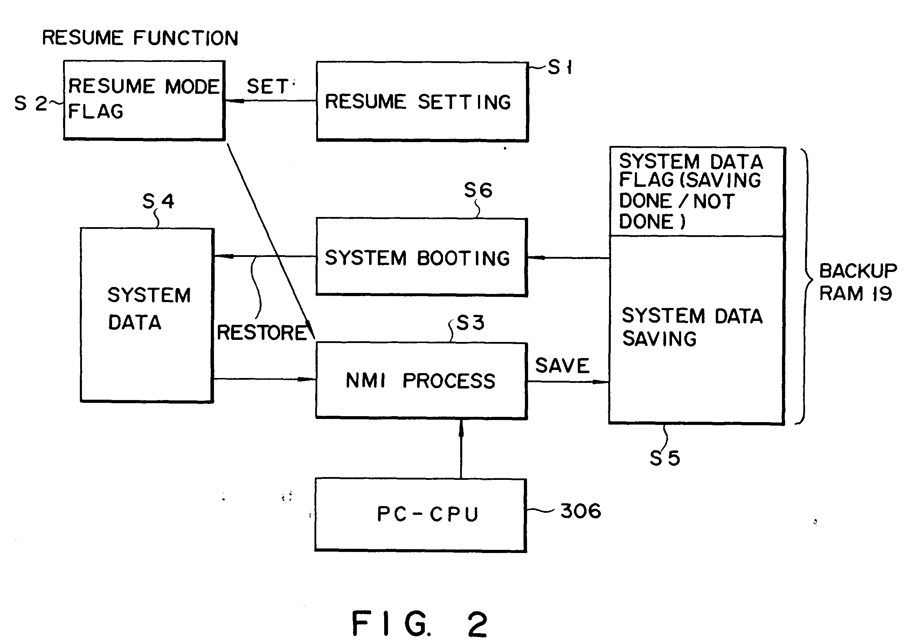

Fig. 2 is a conceptual view for explaining an operation of a resume control system.

In the set-up mode, the resume function is set to be enabled or disabled by a predetermined key operation, the input of a command, and the like (step S1). As a result, a resume mode flag indicative of the set mode in the step S1, is stored in the RAM 13.

The power control (PC) CPU (PC-CPU) 306 provided in the power source circuit 30 monitors at all times the on/off state of the power sources provided in the computer system, irrespective of the on/off state of the main power source thereof. Upon detecting the abnormality of the power source, such as the cutoff of the power and the abnormal power source voltage, the PC-CPU 306 supplies the power control interface 28 with signals indicative of the occurrence of abnormality and the kind of the abnormality. Further, when a power switch 301 is turned off, the PC-CPU 306 supplies a signal indicative of it to the power control interface unit 28.

Upon receiving the signal from the PC-CPU 306, the power control interface 28 outputs the NMI signal to the host CPU 11 in accordance with the contents thereof.

Upon receiving the NMI signal, the host CPU 11 executes the NMI processing. More specifically, upon receiving the NMI signal indicative of the abnormality of the power sources, the CPU 11 starts the resume function, and stores in the backup RAM 19 the system data, data required for the data processing being executed including the contents of CPU registers, various LSI data, the value of a program counter, and the like. The CPU 11 also saves in the RAM 19 a system data flag indicating that the system data has been stored.

Moreover, upon receiving the NMI signal indicative of the OFF state of the power switch 301 (that is, indicating that the system operation is normally completed), the CPU 11 refers to the resume mode flag. If the resume mode flag is ON (enable), the CPU 11 saves the system data in the backup RAM 19, and sets the system data flag indicating that the data has been saved. Then, the CPU 11 supplies a signal to the PC-CPU 306 to perform the power-off processing.

On the other hand, if the resume mode flag is OFF, the CPU 11 executes the power-off processing without carrying out the resume processing.

When the power switch 301 is again turned on, or if the power source voltage is recovered to the predetermined value, the CPU 11 executes system boot processing, in which processing the CPU 11 refers to the system data stored in the backup RAM 19.

Then, the operation of this embodiment will be explained with reference to Figs. 3 to 5.

Fig. 3 shows a flowchart of the NMI processing.

In a step A1, the CPU 11 determines the operation mode thereof. More specifically, the CPU 11 determines whether or not the aforementioned protection enabling bit is set. If the bit is set, the CPU operation mode is determined to be the protective virtual address mode, whereas if the bit is not set, it is determined to be the real address mode. Then, in a step A2, the CPU 11 is set to operate in a predetermined mode. In the embodiment, the resume control program is set to be executed in the real address mode. Thus, the CPU 11 is set in the step A2 to operate in the real address mode to thereby execute the resume control program.

Then, the CPU 11 determines in a step A3 whether or not the resume mode flag is set. If the flag is set, the CPU 11 saves the system data in the backup RAM 19 in step A4. The system data includes the contents of the CPU registers, the various LSI data, the value of the program counter, and the CPU operation mode determined in the step A1. In step A5, the CPU 11 outputs a power-off command to the power source circuit 30.

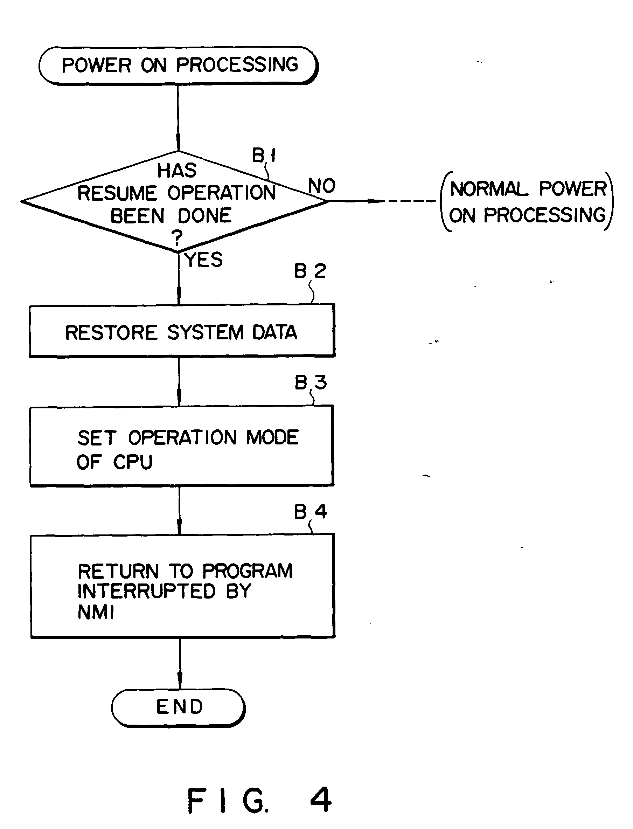

Fig. 4 shows a flowchart of the power-on processing.

In step B1, the CPU 11 refers to the system data flag, thereby determining whether or not the resume processing has been executed. If it is determined that the resume processing has been done, the CPU 11 restores the system data stored in the backup RAM 19 in step B2.

In step B3, the CPU 11 is set to operate in the mode determined in the step A1. In step B4, the CPU 11 returns to the program interrupted by the NMI processing, and executes a command subsequent to the interrupted command.

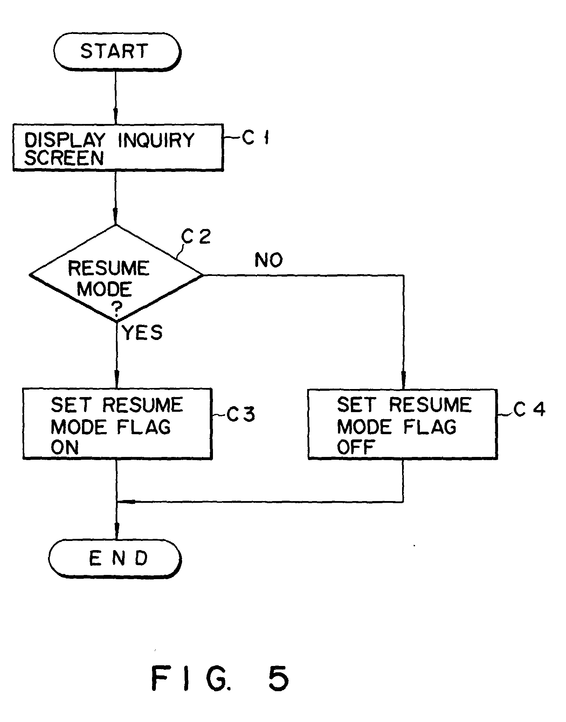

Fig. 5 shows a flowchart of setting the resume flag to be determined in step A3 of Fig. 3. This setting is carried out in the system set-up processing.

The CPU 11 displays an inquiry menu on a PDP 37 in step C1, and in the next step C2 determines whether or not the resume mode is enabled by an input means of a keyboard or the like. If it is determined that the resume mode is enabled, the CPU 11 sets, in step C3, the resume mode flag. On the other hand, if it is determined in the step C2 that the resume mode is disabled, the CPU 11 resets, in step C4, the resume mode flag.

Note that in the above-described embodiment, the resume control program is set to be executed in the real address mode, and the operation mode of the CPU 11 is set to the real address mode in the step A2 to thereby execute the resume control program. However, the present invention is not limited to the above embodiment. The resume control program may be executed in the protective virtual address mode, and accordingly the CPU 11 may be set in the step A2 to operate in the protective virtual address mode.

## Claims

1. A resume control method for a personal computer having a central processing unit (CPU) operable in first and second modes, and capable of executing a resume processing program set to be executed in one of the first and second modes, which comprises processings of saving system data in response to an interrupt signal regarding a power source, and restoring the system data in response to a restoration process of the personal computer, characterized by comprising the steps of:
a) saving (A1) a state in which the CPU is operating, in response to the interrupt signal;
b) setting (A2) the CPU to operate in the one of the first and second modes in which the resume processing program can be executed, and performing a save operation of the system data; and
c) setting (B3) the CPU to operate in the same mode as the CPU was operating at the time of the occurrence of the interrupt, after the restoration processing has been completed.

2. The method according to claim 1, characterized by further comprising:
detecting the interrupt of the power source; and
supplying the CPU with the interrupt signal responsive to the interrupt of the power source.

3. The method according to claim 1, characterized in that memories are addressed in different ways between the first and second modes.

4. The method according to claim 1, characterized by further comprising:
setting resume function either enabled or disenabled; and
executing a resume processing program if the resume function is set enabled.

5. The method according to claim 1, characterized in that the resume processing program is executable in the first mode, and not executable in the second mode, and said step b) sets the CPU to operate in the first mode.

6. A resume control apparatus for a personal computer having a central processing unit (CPU) operable in first and second modes and a power source for supplying power to the CPU, the CPU capable of executing a resume processing program set to be executed in one of the first and second modes, which program comprises the processings of saving the system data upon occurrence of an interrupt signal regarding a power source, and restoring the system data upon a restoration process of the personal computer, characterized by comprising:
means (11, A11) for saving the state in which the CPU is operating in response to the interrupt signal;
means (11, A2) for setting the CPU to operate in the one of the first and second modes in which the resume processing program is executable, and performing a save processing of the system data; and means (11, B3) for setting the CPU to operate in the same mode as the CPU was operating at the time of the occurrence of the interrupt signal, after restoration processing has been completed.

7. The apparatus according to claim 6, characterized by further comprising means for supplying the CPU with the interrupt signal responsive to the interrupt of the power source.

8. The apparatus according to claim 6, characterized in that memories are addressed in different ways between the first and second modes.

9. The apparatus according to claim 6, characterized by further comprising means for setting resume function either enabled or disenabled, and means for executing a resume processing program if the resume function is set enabled.

10. The apparatus according to claim 6, characterized in that the resume processing program can be executed in the first mode, and cannot be executed in the second mode, and the setting means includes means for setting the CPU to operate in the first mode.

## Patentansprüche

1. Wiederaufnahmesteuerverfahren für Personalcomputer mit einer Zentraleinheit (CPU), die in einem ersten und einem zweiten Modus betreibbar ist und ein Wiederaufnahmeverarbeitungsprogramm ausführen kann, das gesetzt ist, um in einem Modus aus dem ersten und zweiten Modus ausgeführt zu werden, wobei das Programm Verarbeitungen des Bewahrens von Systemdaten, die Betriebsbedingungen der CPU anzeigen, abhängig von einer Abnormalität einer Leistungsquelle und des Wiederherstellens der Systemdaten abhängig von einer Wiederherstellung der Abnormalität umfaßt, gekennzeichnet durch die folgenden Schritte:
a) Bewahren (A1) des Operationsmodus der CPU abhängig von der Abnormalität der Leistungsquelle,
b) Setzen (A2) der CPU, um in einem Modus aus dem ersten und zweiten Modus zu arbeiten, in welchem das Wiederaufnahmeverarbeitungsprogramm ausgeführt werden kann, und Durchführen einer Bewahrungsoperation, und
c) Setzen (B3) der CPU, um in dem gleichen Modus zu arbeiten, in welchem die CPU zu der Zeit des Auftretens der Abnormalität arbeitete, nachdem Wiederherstellung zu der Zeit der Wiederherstellung der Abnormalität abgeschlossen ist.

2. Verfahren nach Anspruch 1, gekennzeichnet durch weiterhin:
Erfassen der Abnormalität der Leistungsquelle, und
Versorgen der CPU mit einem NMI-(nicht-maskierbares Unterbrechungs- bzw. Interrupt-)Signal abhängig von der Abnormalität der Leistungsquelle.

3. Verfahren nach Anspruch 1, dadurch gekennzeichnet, daß Speicher auf verschiedenen Wegen zwischen den ersten und zweiten Moden adressiert werden.

4. Verfahren nach Anspruch 1, gekennzeichnet durch weiterhin:
Setzen einer Wiederaufnahmefunktion entweder freigegeben oder abgeschaltet, und
Ausführen eines Wiederaufnahmeverarbeitungsprogrammes, wenn die Wiederaufnahmefunktion als freigegeben gesetzt ist.

5. Verfahren nach Anspruch 1, dadurch gekennzeichnet, daß das Wiederaufnahmeverarbeitungsprogramm in dem ersten Modus ausführbar und in dem zweiten Modus nicht ausführbar ist, und daß der Schritt b) die CPU setzt, um in dem ersten Modus zu arbeiten.

6. Wiederaufnahmesteuergerät für Personalcomputer mit einer Zentraleinheit (CPU), die in einem ersten und einem zweiten Modus betreibbar ist, und einer Leistungsquelle zum Speisen von Leistung zu der CPU, wobei die CPU ein Wiederaufnahmeverarbeitungsprogramm ausführen kann, das gesetzt ist, um in einem Modus aus dem ersten und zweiten Modus ausgeführt zu werden, wobei das Programm die Verarbeitungen des Bewahrens der Systemdaten, die den Betriebszustand der CPU nach Auftreten einer Abnormalität in einer Leistungsquelle anzeigen, und des Wiederherstellens der Systemdaten nach einer Wiederherstellung der Abnormalität umfaßt, gekennzeichnet durch:
eine Einrichtung (11, A11) zum Bewahren des Modus, in welchem die CPU arbeitet, abhängig von der Abnormalität der Leistungsquelle,
eine Einrichtung (11, A2) zum Setzen der CPU, um in einem Modus aus dem ersten und zweiten Modus zu arbeiten, in welchem das Wiederaufnahmeverarbeitungsprogramm ausführbar ist, und zum Durchführen einer Bewahrungsverarbeitung, und
eine Einrichtung (11, B3) zum Setzen der CPU, um in dem gleichen Modus zu arbeiten, wie die CPU zu der Zeit des Auftretens der Abnormalität arbeitete, nachdem eine Wiederherstellungsverarbeitung abgeschlossen wurde, wenn die Leistungsquelle normalisiert ist.

7. Gerät nach Anspruch 6, gekennzeichnet durch weiterhin eine Einrichtung zum Versorgen der CPU mit einem NMI-(nicht-maskierbares Unterbrechungs- bzw. Interrupt-)Signal abhängig von der Abnormalität der Leistungsquelle.

8. Gerät nach Anspruch 6, dadurch gekennzeichnet, daß Speicher auf verschiedenen Wegen zwischen den ersten und zweiten Moden adressiert werden.

9. Gerät nach Anspruch 6, gekennzeichnet durch weiterhin eine Einrichtung, um eine Wiederaufnahmefunktion entweder freigegeben oder abgeschaltet zu setzen, und eine Einrichtung zum Ausführen eines Wiederaufnahmeverarbeitungsprogrammes, wenn die Wiederaufnahmefunktion als freigegeben gesetzt ist.

10. Gerät nach Anspruch 6, dadurch gekennzeichnet, daß das Wiederaufnahmeverarbeitungsprogramm in dem ersten Modus ausgeführt werden kann und in dem zweiten Modus nicht ausgeführt werden kann, und daß die Setzeinrichtung eine Einrichtung aufweist, um die CPU zu setzen, damit sie in dem ersten Modus arbeitet.

## Revendications

1. Procédé de commande de redémarrage pour un ordinateur personnel possédant une Unité Centrale de Traitement CPU pouvant fonctionner dans des premier et second modes et pouvant exécuter un programme de traitement de redémarrage dans un des premier et second modes, programme comprenant un traitement de sauvegarde des données du système indiquant des conditions de fonctionnement de l'Unité Centrale de Traitement CPU en réponse à une anomalie d'une source de puissance et de restauration des données du système en réponse au rétablissement de l'anomalie,
procédé caractérisé en ce qu'il comprend les étapes suivantes :
a) la sauvegarde (A1) du mode de fonctionnement de l'Unité Centrale de Traitement CPU en réponse à l'anomalie de la source de puissance;
b) le placement (A2) de l'Unité Centrale de Traitement CPU en fonctionnement dans un des premier et second modes dans lequel le programme de traitement de redémarrage peut être exécuté et la réalisation d'une opération de sauvegarde; et
c) le placement (B3) de l'Unité Centrale de Traitement CPU en fonctionnement dans le même mode que celui dans lequel l'Unité Centrale de Traitement CPU fonctionnait au moment de l'apparition de l'anomalie après l'achèvement de la restauration au moment de la réapparition de l'anomalie.

2. Procédé selon la revendication 1, caractérisé en ce qu'il comprend, de plus :
- la détection de l'anomalie de la source de puissance; et
- la fourniture à l'Unité Centrale de Traitement CPU d'un signal d'Interruption Non-Masquable NMI selon l'anomalie de la source de puissance.

3. Procédé selon la revendication 1, caractérisé en ce que les mémoires sont adressées de façon différente selon les premier et second modes.

4. Procédé selon la revendication 1, caractérisé en ce qu'il comprend, de plus :
- la validation ou l'invalidation de la fonction de redémarrage; et
- l'exécution d'un programme de traitement de redémarrage si la fonction de redémarrage est validée.

5. Procédé selon la revendication 1, caractérisé en ce que le programme de traitement de redémarrage peut être exécuté dans le premier mode et non pas dans le second mode et ladite étape b) place l'Unité Centrale de Traitement CPU en fonctionnement dans le premier mode.

6. Dispositif de commande de redémarrage pour un ordinateur personnel possédant une Unité Centrale de Traitement CPU pouvant fonctionner dans des premier et second modes et une source de puissance pour fournir une puissance à l'Unité Centrale de Traitement CPU, l'Unité Centrale de Traitement CPU pouvant exécuter un programme de traitement de redémarrage établi pour être exécuté dans un des premier et second modes, programme comprenant la sauvegarde des données du système indiquant la condition de fonctionnement de l'Unité Centrale de Traitement CPU lors de l'apparition d'une anomalie dans une source de puissance et la restauration des données du système lors du rétablissement de l'anomalie,
dispositif caractérisé en ce qu'il comprend :
- un moyen (11, A11) pour sauvegarder le mode dans lequel fonctionne l'Unité Centrale de Traitement CPU en réponse à l'anomalie de la source de puissance;
- un moyen (11, A2) pour placer l'Unité Centrale de Traitement CPU en fonctionnement dans un des premier et second modes dans lequel le programme de traitement de redémarrage peut être exécuté et pour effectuer un traitement de sauvegarde; et
- un moyen (11, B3) pour placer l'Unité Centrale de Traitement CPU en fonctionnement dans le même mode que celui dans lequel l'Unité Centrale de Traitement CPU fonctionnait au moment de l'apparition de l'anomalie après que le traitement de restauration ait été achevé lorsque la source de puissance est redevenue normale.

7. Dispositif selon la revendication 6, caractérisé en ce qu'il comprend, de plus, un moyen pour fournir à l'Unité Centrale de Traitement CPU un signal d'Interruption Non-Masquable NMI selon l'anomalie de la source de puissance.

8. Dispositif selon la revendication 6, caractérisé en ce que les mémoires sont adressées de façon différente selon les premier et second modes.

9. Dispositif selon la revendication 6, caractérisé en ce qu'il comprend, de plus, un moyen pour soit valider, soit invalider la fonction de redémarrage, et un moyen pour exécuter un programme de traitement de redémarrage si la fonction de redémarrage est validée.

10. Dispositif selon la revendication 6, caractérisé en ce que le programme de traitement de redémarrage peut être exécuté dans le premier mode et ne peut être exécuté dans le second mode, et le moyen d'établissement comprend un moyen pour placer l'Unité Centrale de Traitement CPU en fonctionnement dans le premier mode.
